# EUROPÄISCHE PATENTANMELDUNG

(11) **EP 2 239 472 A1**
(43) Veröffentlichungstag der Anmeldung: **13.10.2010**
(21) Anmeldenummer: 09075282.5
(22) Anmeldetag: 30.06.2009
(51) Int. Cl.: F16B 37/04, F16B 37/12, F16B 39/04, F16B 41/00, F16L 3/10

(54) **Unterstützende Konstruktion für Verteilungen von gebäudetechnischen Anlagen und Weise deren Fertigung**

(30) Priorität: 08.04.2009 CZ 20090216
(71) Anmelder: Hass Profile s.r.o., 669 04 Znojmo (CZ)
(72) Erfinder: Die Erfindernennung liegt noch nicht vor
(74) Vertreter: Prikryl, Jaromir

(57) **Zusammenfassung**

Unterstützende Konstruktion für Verteilungen von gebäudetechnischen Anlagen bestehend aus einem Körper (2) und einer Mutter (3), wo aus dem Körper (2) ein durchgehender erhöhter Hals (21) ausgeführt ist, in dem die Mutter (3) positioniert ist. Die Mutter (3) ist in das vom durchgehenden erhöhten Hals (21) ausgebildeten Innengewinde (22) eingeschraubt. Die Mutter (3) enthält einen Absatz (31), der Anschlag fürs Einschrauben der Mutter (3) ins Innengewinde (22) ist. Die Mutter wird zum erhöhten Hals (21) mindestens mit einem von der Seitenwand des erhöhten Halses (21) geführten Element fixiert.

Das Fertigungsverfahren der unterstützenden Konstruktion beruht darin, dass durch die Umformung der Körper (2) auch mit dem durchgehenden erhöhten Hals (21) ausgebildet wird, im durchgehenden erhöhten Hals (21) wird das Innengewinde (22) ausgebildet, in welches von der Innenseite (25) des Körpers (2) die Mutter (3) eingeschraubt wird, die folgend von der Seitenwand des erhöhten Halses (21) mechanisch gesichert wird.

## Beschreibung

Die Erfindung betrifft unterstützende Konstruktionen für Verteilungen von gebäudetechnischen Anlagen

Bekannte unterstützende Konstruktionen für Verteilungen von gebäudetechnischen Anlagen werden aus einem zylindrischen Körper mit einer Öffnung gebildet, in welches eine Mutter mit Gewinde eingeschweißt wird. Diese unterstützenden Konstruktionen für Verteilungen von gebäudetechnischen Anlagen werden so gefertigt, dass an einer Exzenterpresse mittels eines Umformwerkzeugs das Halbzeug vorgepresst wird, aus dem im Folgewerkzeug eine Schelle mit Öffnung ausgestanzt wird. In die Öffnung des Schellenkörpers wird mit Hilfe der Punktschweißmaschine die Mutter mit Gewinde punktgeschweißt, die folgend am Umfang der Mutter mit Hilfe eines Schweißautomaten oder mit dem Handschweißen-Verfahren zum Schellenkörper stumpfgeschweißt wird.

Der Hauptnachteil dieses Verfahrens ist die Möglichkeit des Auftritts von verdeckten Mängeln in unlösbarer Verbindung von zwei Teilen - der Schweißnaht.

Bekannte Mängel bestehender unterstützender Konstruktionen für Verteilungen von gebäudetechnischen Anlagen behebt die unterstützende Konstruktion gemäß Erfindung bestehend aus einem Körper und einer Mutter. Das Wesen der Erfindung beruht darin, dass aus dem Körper ein durchgehender erhöhter Hals ausgeführt ist, in dem die Mutter positioniert ist. Die Positionierung der Mutter im erhöhten Hals wird mittels Einschrauben ins im durchgehenden erhöhten Hals ausgebildeten Innengewinde vorgenommen. Die Mutter enthält einen Absatz, der Anschlag fürs Einschrauben der Mutter ins Innengewinde ist. Es ist vorteilhaft, die Muttern zum erhöhten Hals mindestens mit einem von der Seitenwand des erhöhten Halses geführten Element zu fixieren.

Das Fertigungsverfahren der unterstützenden Konstruktion nach Anspruch beruht darin, dass durch die Umformung der Körper auch mit einem durchgehenden erhöhten Hals ausgebildet wird. Im durchgehenden erhöhten Hals wird folgend das Innengewinde ausgebildet, in welches von der Innenseite des Körpers die Mutter eingeschraubt wird. Eingeschraubte Mutter wird folgend von der Seitenwand des erhöhten Halses mechanisch gesichert.

Vorteil der beschriebenen Erfindung ist die Verhinderung von Entstehung verdeckter Mängel, deren Entstehung beim Schweißen nicht ausgeschlossen werden kann. Es kommt zur Erhöhung der Verbindungsfestigkeit zwischen der Schelle und dem erhöhten Hals, aus Sicht der Produktion kommt es zur Herabsetzung der Ausschussmenge und hiermit zur Senkung von gesamten Herstellkosten und Erhöhung der Arbeitsproduktivität.

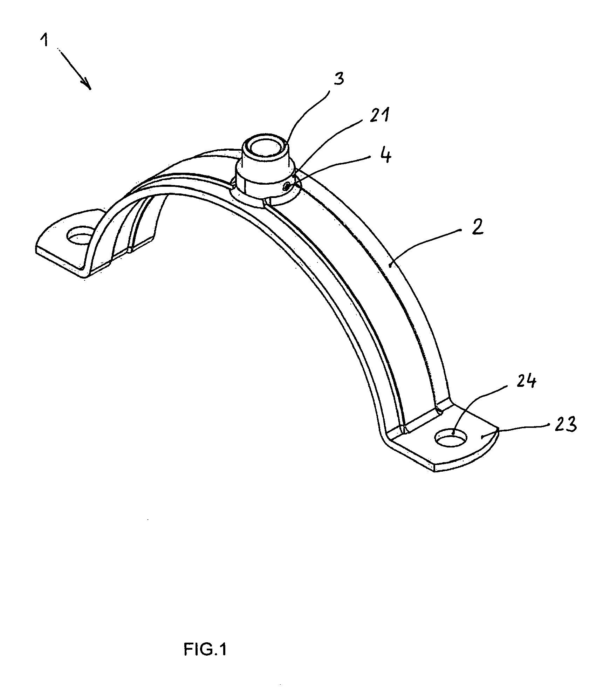

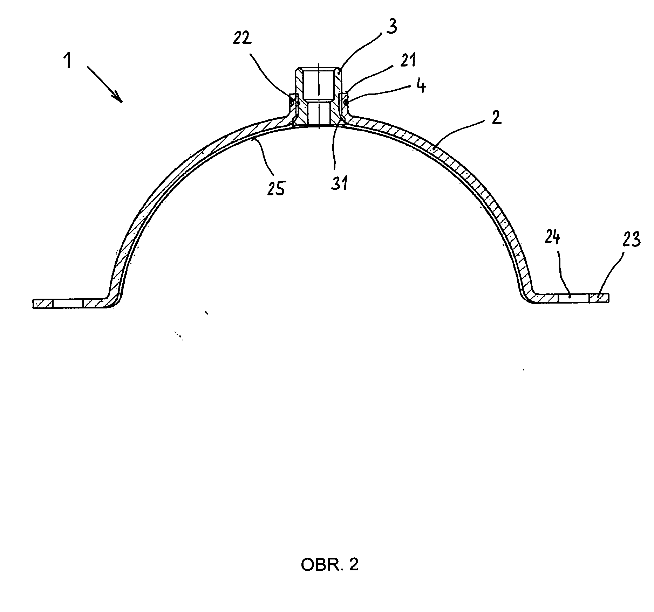

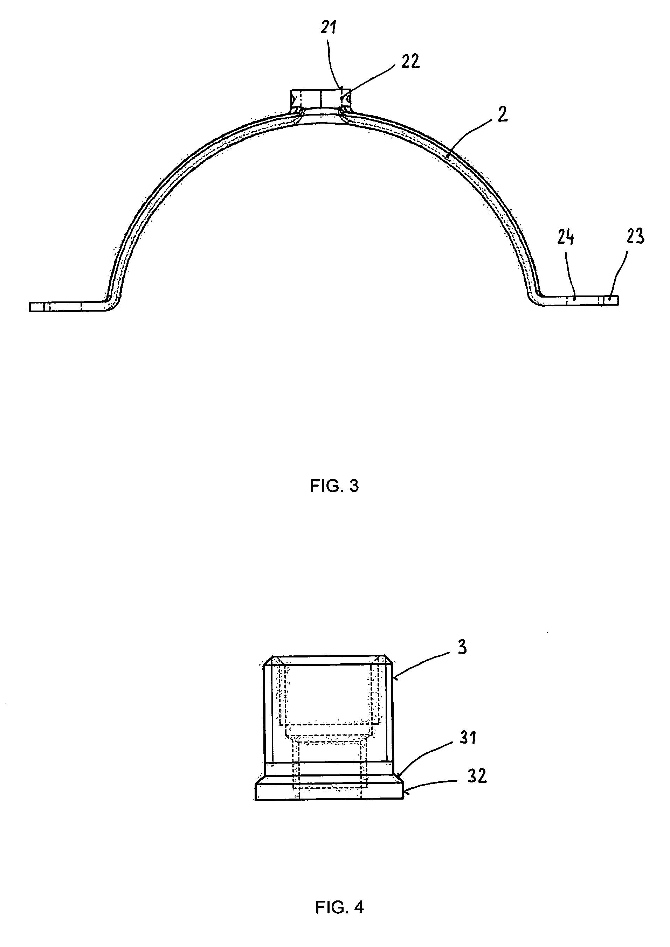

Die Erfindung ist in folgenden Figuren dargestellt, wo in Fig. 1 axonometrische Ansicht auf die unterstützende Konstruktion dargestellt ist, in Fig. 2 ist der Schnitt durch den Körper und die Mutter der in Fig. 1 dargestellten Konstruktion dargestellt, in Fig. 3 ist der Schnitt durch den Körper der unterstützenden Konstruktion ohne Mutter, in Fig. 4 ist die Mutter dargestellt.

Unterstützende Konstruktion 1 für Verteilungen von gebäudetechnischen Anlagen besteht gemäß Fig. 1 bis 4 aus einem zylindrischen Körper 2 und einer Mutter 3. Aus dem zylindrischen Körper 2 ist ein durchgehender erhöhter Hals 21 ausgeführt, in dem das Innengewinde 22 ausgebildet ist. Ins Innengewinde 22 des Körpers 2 ist die Mutter 3 eingeschraubt. An der Mutter 3 ist der Absatz 31 ausgebildet, der vom durchschnittsmäßig kleineren Bereich mit Gewinde in durchschnittsmäßig größeren Bereich 32 übergeht. Der Absatz 31 an der Mutter 3 ist Anschlag fürs Einschrauben der Mutter 3 ins Innengewinde 22. Die Mutter 3 ist nach dem Einschrauben in den erhöhten Hals 21 in diesem erhöhten Hals 21 mindestens mit einem von der Seitenwand des erhöhten Halses geführten Element 4 gesichert. Als geeignetes Element 4 kann als Sicherungselement die Verformung durch Umformung mit einer Stanzspitze oder die Stellschraube eingesetzt werden. Körper 2 enthält weiter die Flanschteile 23, in denen Öffnungen 24 ausgebildet sind, über die mit Hilfe von Verbindungsteilen zwei zylindrische Körper von unterstützenden Konstruktionen für Verteilungen von gebäudetechnischen Anlagen verbunden werden.

Das Fertigungsverfahren der unterstützenden Konstruktion beruht darin, dass mit Hilfe des umformenden Folgewerkzeugs der zylindrische Körper 2 auch mit dem durchgehenden erhöhten Hals 21 ausgebildet wird. Im durchgehenden erhöhten Hals 21 wird das Innengewinde 22 ausgebildet, in welches von der Innenseite 25 des zylindrischen Körpers 2 bis zum Absatz 31 die Mutter 3 eingeschraubt wird, die mit ihrem gewählten Drehmoment angezogen wird. Die Mutter 3 wird folgend von der Seitenwand des erhöhten Halses 21 mechanisch gesichert.

Unterstützende Konstruktionen für Verteilungen von gebäudetechnischen Anlagen gemäß Erfindung können in verschiedenen Modifizierungen für das Verbinden von Rohrleitungen und anderen Verteilungen gebäudetechnischer Anlagen, des weiteren von Leitungen mit geöffnetem oder geschlossenem Querschnitt nach Größe des Innendurchmessers der unterstützenden Konstruktion für Verteilungen von gebäudetechnischen Anlagen gewerblich produziert und verwertet werden.

## Patentansprüche

1. Unterstützende Konstruktion für Verteilungen von gebäudetechnischen Anlagen bestehend aus einem Körper (2) und einer Mutter (3), **dadurch gekennzeichnet, dass** aus dem Körper (2) ein durchgehender erhöhter Hals (21) ausgeführt ist, in dem die Mutter (3) positioniert ist.

2. Unterstützende Konstruktion nach Anspruch 1, **dadurch gekennzeichnet, dass** die Mutter (3) in das im durchgehenden erhöhten Hals (21) ausgebildeten Innengewinde (22) eingeschraubt ist.

3. Unterstützende Konstruktion nach Ansprüchen 1 und 2, **dadurch gekennzeichnet, dass** die Mutter (3) einen Absatz (31) enthält.

4. Unterstützende Konstruktion nach Ansprüchen 1 bis 3, **dadurch gekennzeichnet, dass** die Mutter zum erhöhten Hals (21) mindestens mit einem von der Seitenwand des erhöhten Halses geführten Element (4) fixiert ist.

5. Fertigungsverfahren der unterstützenden Konstruktion nach Ansprüchen 1 bis 4, **dadurch gekennzeichnet, dass** durch Umformung der Körper (2) auch mit einem durchgehenden erhöhten Hals (21) ausgebildet wird, im durchgehenden erhöhten Hals (21) wird das Innengewinde (22) ausgebildet, in welches von der Innenseite (25) des Körpers (2) die Mutter (3) eingeschraubt wird, die folgend von der Seitenwand des erhöhten Halses (21) mechanisch gesichert wird.
